# EUROPÄISCHE PATENTANMELDUNG

(11) **EP 1 632 788 A1**
(43) Veröffentlichungstag der Anmeldung: **08.03.2006**
(21) Anmeldenummer: 04405556.4
(22) Anmeldetag: 07.09.2004
(51) Int. Cl.: G01S 5/16

(54) **Positionsbestimmungsvorrichtung**

(71) Anmelder: RUAG Electronics, 3014 Bern (CH)
(72) Erfinder: Lüthi, Roland, Dipl.-El. Ing. ETH, 3302 Moosseedorf (CH); Stauffer, Erich, Dipl. El. Ing. FH, 3250 Lyss (CH); Schultze, Henri, Dipl.-Ing. Elektrotechnik, 3052 Zollikofen (CH); Lazecki, René, 3608 Thun (CH)
(74) Vertreter: AMMANN PATENTANWÄLTE AG BERN

(57) **Zusammenfassung**

Die Position eines (ortsveränderlichen) Objekts wird mit geringem Aufwand innerhalb eines vorgegebenen Raums bestimmt, in dem dieser in Zonen (7, 12) eingeteilt wird. Dazu werden Strahler (1) so angeordnet, dass sie ein Signal in Zonen (7) des Raums gezielt abstrahlen, die den Raum abdecken. Die Erhöhung der Genauigkeit wird durch Überlappung von Zonen erzielt. Die Empfänger (2) befinden sich am Objekt. Je nachdem, ob ein Empfänger einen oder mehrere Strahler (1) empfängt, befindet er sich in einer Überlappungszone (12) oder in einer Zone, die nur von einem Strahler (1) erreicht wird.

## Beschreibung

Die vorliegende Erfindung betrifft eine Positionsbestimmungsvorrichtung gemäss dem Oberbegriff des Patentanspruchs 1.

Solche Positionsbestimmungsvorrichtungen werden zum Beispiel von einer Armee bei Gefechtsübungen mit Simulationsunterstützung verwendet und sollten in der Lage sein, die Position von festen und sich bewegenden Objekten (Soldaten, Minen, Waffen, Munition usw.) in kurzen Zeitabständen immer wieder genau zu vermessen.

Es sind Positionsbestimmungsvorrichtungen bekannt, die eine Anzahl von mit dem sogenannten GPS (Global Positioning System) ausgerüsteten Objekten orten können. Diese bekannten Positionsbestimmungsvorrichtungen haben jedoch unter anderem den Nachteil, dass sie in Räumen und bewachsenem Gelände nicht optimal funktionieren. Zudem sind sie teuer und relativ ungenau.

Der Erfindung liegt die Aufgabe zu Grunde, eine Positionsbestimmungsvorrichtung zu schaffen, welche auf einfache und preisgünstige Weise eine Ortung einer Anzahl von Objekten mit einer ausreichenden Genauigkeit ermöglicht.

Erfindungsgemäss wird dies durch die Positionsbestimmungsvorrichtung gemäss Anspruch 1 erreicht. Weitere vorteilhafte Ausführungsformen gehen aus den abhängigen Ansprüchen hervor.

Die Vorrichtung erlaubt insbesondere eine lokale Positionsbestimmung von Objekten, ohne dass es nötig wäre, die Objekte mit GPS auszustatten.

Nachfolgend werden einige beispielsweise Ausführungsformen der Erfindung anhand von Figuren näher erläutert. Es zeigen:
- Fig. 1: schematisch den Aufbau eines Ortungssystems mit Strahler 1, Empfänger 2 und Ortungsrechner 3,
- Fig. 2: eine schematische Übersicht der Positionsbestimmungsvorrichtung mit zwei Strahlern, drei Zonen und zwei Empfängern,
- Fig. 3: eine Zonentabelle,
- Fig. 4: eine Seitenansicht einer Bauform eines Strahlers.

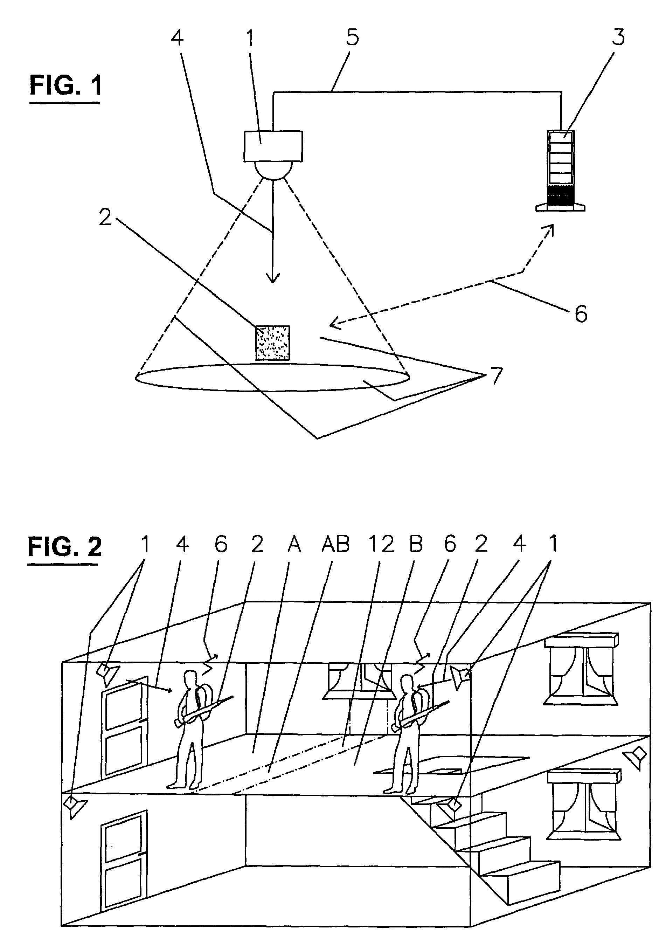

Anhand der Figur 1 wird im Folgenden eine erste Ausführungsform der Erfindung beschrieben. Die Figur 1 zeigt schematisch einen Strahler 1, einen Empfänger 2 und einen Ortungsrechner 3 einer Positionsbestimmungsvorrichtung gemäss der Erfindung.

Pfeil 4 deutet an, dass zwischen dem Strahler 1 und dem Empfänger 2 eine Verbindung durch eine elektromagnetische Welle, üblicherweise Licht im Infrarotbereich, existiert.

Optional besteht zwischen dem Strahler 1 und dem Ortungsrechner 3 ein Kommunikationskanal 5, üblicherweise über eine drahtgebundene elektromagnetische Welle.

Zwischen dem Ortungsrechner 3 und dem Empfänger 2 besteht ein Kommunikationskanal 6, üblicherweise über eine nicht drahtgebundene elektromagnetische Welle. Es ist aber auch möglich, dass die Positionsbestimmungsvorrichtung andere Kommunikationskanäle 5 und 6 zur Signalübertragung umfasst, wie zum Beispiel Lichtwellenleiterverbindungen, Drahtverbindungen, Funkverbindungen oder eine Kombination derselben.

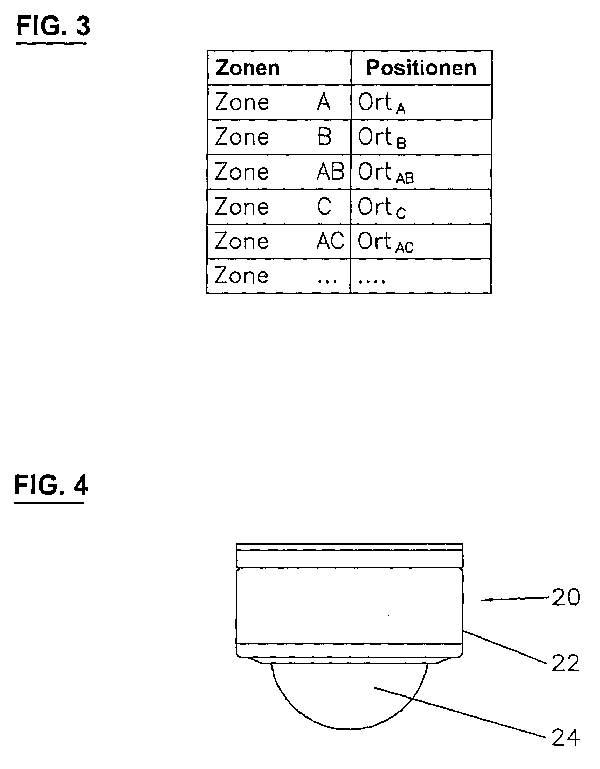

Vor der Nutzung des Ortungssystems wird in jeden Empfänger 2 eine Tabelle 10 gemäss Fig. 3 über den Kommunikationskanal 6 eingebracht, welche im einfachsten Fall für jede Zone die korrespondierende Position enthält. Die Position ist in der Spalte "Position" jeweils durch einen Koordinatenbereich oder eine Kennung der jeweiligen Zone enthalten. ("Ort_{A}", "Ort_{B}" usw.). Im letzteren Fall muss eine entfernte Recheneinheit, z.B. der Ortungsrechner 3, aus der Kennung den Raumbereich des Objekts, d.h. seine Position, bestimmen. Während des Betriebs sendet jeder Strahler 1 in gewissen Abständen einen eindeutigen Zonencode über den Kommunikationskanal 4 aus, der in der Empfangszone 7 empfangen werden kann. Falls der Empfänger den Zonencode korrekt empfangen konnte, wird über die Tabelle 10 die Position ausgelesen.

Falls während einer gewissen Zeiteinheit mehrere Zonencodes, d.h. mehrere Strahler empfangen werden, z.B. Zonencode A und B, wird in der Tabelle (10) die entsprechende Position, z.B. Eintrag Zone AB, ausgelesen (s. Fig 2). Werden die Strahler 1 so angeordnet, dass sich die Empfangszonen 7 überlappen, erfolgt somit eine genauere Positionsbestimmung, als wenn sich die Zonen bei der gleichen Anzahl Strahler nicht überlappen.

Bei 2 Strahlern ergeben sich so max. 4 Zonen. (In einer Zone wird gar kein Signal empfangen, somit reduzieren sich die üblicherweise nutzbaren Zonen in diesem Fall auf 3). Bei n Strahlern ergeben sich somit 2ⁿ Zonen. (In einer Zone wird gar kein Signal empfangen, somit reduzieren sich die üblicherweise nutzbaren Zonen auf (2ⁿ-1)). Je nach geometrischer Anordnung ergeben sich weniger nutzbare Zonen.

Da einfache Empfänger 2 während einer Zeiteinheit nur ein gleichartiges Signal empfangen können, besteht die Gefahr, dass sich mehrere Strahler 1 gegenseitig stören. Mittels einer zentralen Steuerung durch den Rechner 3 können die Strahler 1 so gesteuert werden, dass pro Zone 7 inkl. Zonen 12 gebildet aus Überlappungen nur ein Strahler zu einem bestimmten Zeitpunkt sendet. Alternativ können die Strahler 1 auch jeweils über eine interne Uhr, d.h. einen Zeitgeber, verfügen, der den Sendezeitpunkt vorgibt. Die Uhr kann fest eingestellt oder von einer zentralen Steuerung programmierbar sein.

Eine andere Methode ist die Verwendung von Strahlern, welche selbständig (ohne Steuerung durch einen Rechner) in festen, aber unterschiedlichen Perioden senden. Falls nun mehrere Strahler einmal gleichzeitig senden, ist so sichergestellt, dass bei der nächsten Sendung die Strahler nicht mehr gleichzeitig senden.

Eine weitere Methode ist die Verwendung von Strahlern, welche selbständig (ohne Steuerung durch einen Rechner) in zufallsbestimmten Abständen senden. Falls nun mehrere Strahler doch gleichzeitig senden, ist so sichergestellt, dass bei der nächsten Sendung die Strahler mit einer hohen Wahrscheinlichkeit nicht gleichzeitig senden.

Eine weitere Methode ist die Verwendung von Strahlern und Empfängern, welche unterschiedliche elektromagnetische Wellen senden respektive empfangen können. Denkbar sind verschiedene Frequenzen und/oder verschiedene Modulationsarten, so dass ein Empfänger die Signale der Strahler für seine Zone auch dann unterscheiden und auswerten kann, wenn die Strahler gleichzeitig senden. Die angegebenen Methoden können auch kombiniert werden.

Die Tabelle 10 muss nicht alle möglichen Kombinationen von Zonen enthalten. Werden innerhalb einer bestimmten Zeiteinheit Zonencodes empfangen, welche eine Kombination ergeben, die nicht in der Tabelle abgespeichert ist, so kann mit heuristischen Methoden die Kombination so lange aufgespalten werden, bis für jedes Spaltprodukt eine Position ausgelesen werden kann. Anschliessend werden die Positionen gemittelt.

### Beispiel:

Wird die Tabelle 10 gemäss Fig 3 verwendet und der Empfänger empfängt während einer bestimmten Zeiteinheit die Codes A, B und C, dann ist die Zone ABC nicht in der Tabelle enthalten. Jedoch sind die Zonen AB und die Zone C in der Tabelle enthalten. Somit können die Position AB und die Position C zur Position ABC, d.h. dem Überlappungsbereich der Positionen, verrechnet werden.

Ein Vorteil der Erfindung besteht auch darin, dass die räumliche Auflösung an die jeweiligen Anforderungen anpassbar ist. GPS liefert z.B. eine vom Gesamtsystem vorgegebene, feste Auflösung.

In Gefechtsübungen genügt oft ein relativ grobes Raster mit einer Auflösung von 1 m oder auch nur z.B. 3 m. Die erfindungsgemässe Vorrichtung gestattet es jedoch auch, in kritischen Zonen eine erhöhte Auflösung zu erhalten und in anderen eine wesentlich gröbere.

Fig. 4 zeigt eine mögliche Bauform 20 eines Strahlers 1. Der Strahler ist in einem Gehäuse 22 angeordnet und sendet durch die Abdeckung 24 hindurch, die hier im Wesentlichen halbkugelförmig und für die verwendeten Wellen bzw. Strahlung transparent ist. Für die gegebenenfalls nötige Ausrichtung und/oder Bündelung der Wellen oder der Strahlung verfügen die Strahler über eine nicht dargestellte Vorrichtung. Diese ist jedoch an sich bekannt und bedarf daher wie auch die Strahler selbst keiner weiteren Erläuterung.

Ausgehend von der vorangehenden Beschreibung sind dem Fachmann zahlreiche Abwandlungen und Anpassungen zugänglich, ohne den Bereich der Erfindung zu verlassen, der durch die Ansprüche definiert ist.

Denkbar ist u.a.:
- Zonen mit anderen Formen oder Kombinationen von Formen, um eine optimale Unterteilung des jeweiligen überwachten Gebiets zu erhalten;
- zusätzlich oder alternativ eine andere als horizontale Anordnung der Zonen, z.B. vertikal übereinander zum Feststellen, in welcher Höhe sich der Empfänger über dem Boden befindet (z.B. als Hinweis auf die Fortbewegungsart: aufrecht, gebückt, kriechend).
- Messung der zeitlichen Verschiebung der Signale der Strahler in einer Überlappungszone: Wenn dem Empfänger die Zeitpunkte der Abstrahlung der Signale der einzelnen Strahler bekannt sind, stellen die zeitlichen Verschiebungen der Empfangszeitpunkte ein Mass für die Laufzeit Strahler-Empfänger dar, woraus eine zusätzliche Ortsinformation resultiert. Am einfachsten erfolgt dies dadurch, dass die Strahler gleichzeitig senden, um einen Kombinationscode zu erzeugen. Aus der Verschiebung der Komponenten gegeneinander kann die Verschiebung der Empfangszeiten ermittelt werden.
- Austausch der Funktionen Strahler und Empfänger: Die Strahler oder Sender befinden sich an den Personen oder beweglichen Objekten. Befindet sich die Person bzw. das Objekt in einer (Empfangs-)Überlappungszone, wird das Signal von zwei (oder mehr) Empfängern aufgenommen, wodurch die Position in der Überlappungszone feststellbar ist.
- Ein Strahler strahlt mehrere Codes ab, wobei die Codes in unterschiedlichen Zonen empfangen werden können. Mit einer solchen Struktur werden damit bereits zwei oder mehr Zonen und gegebenenfalls auch die entsprechenden Überlappungszonen erzeugt.
- Anordnung von mehr als einem Strahler in einem Gehäuse.
- Anordnung von mehr als einem Empfänger an dem jeweiligen Objekt: Insbesondere können Übungsteilnehmer beispielsweise einen Empfänger am Kopf oder Oberkörper und einen in der Nähe des Fusses tragen. In Verbindung mit einer vertikalen Auflösung der Positionsbestimmungsvorrichtung kann damit z.B. die Körperhaltung näherungsweise bestimmt werden.

## Patentansprüche

1. Positionsbestimmungsvorrichtung zur Bestimmung der Position eines Objekts, insbesondere eines ortsveränderbaren, **dadurch gekennzeichnet, dass** sie eine Anzahl von Strahlern (1) mit einer Sendevorrichtung zum Senden einer elektromagnetischen Welle und zum Empfang der Welle mindestens einen Empfänger (2) mit einer Empfangsvorrichtung zum Empfang der Welle umfasst, jeder Strahler (1) geeignet ist zum Senden mindestens eines eindeutig den Strahler identifizierenden Signals in einer bestimmten geometrischen Zone (7), wobei sich die Zonen wenigstens zweier Strahler überlappen, so dass vom Empfänger (2) die Position in einer Zone (7) nur eines Strahlers oder in einer Überlappungszone (12), in die mindestens zwei Strahler senden, bestimmbar ist.

2. Positionsbestimmungsvorrichtung gemäss Anspruch 1, **dadurch gekennzeichnet, dass** alternativ oder zusätzlich die Funktion zwischen Strahler und Empfänger austauschbar ist oder ausgetauscht ist, durch die Sendevorrichtung des Empfängers ein den Empfänger identifizierender Code ausstrahlbar ist und die mit einer Empfangsvorrichtung versehenen Strahler (1) mit einer Auswertungseinheit verbunden sind, so dass aus dem Empfang des von der Sendevorrichtung eines Empfängers (2) ausgesandten Codes durch einen oder mehrere Strahler (1) der Aufenthalt des Objekts in der Empfangszone (7) eines der Strahler oder in einer Überlappung (12) von mindestens zwei Empfangszonen festellbar ist.

3. Positionsbestimmungsvorrichtung nach Anspruch 1, **dadurch gekennzeichnet, dass** jeder Empfänger (2) über eine Tabelle (10) verfügt, welche für Zonen und Überlappungszonen (12) die Position des Empfängers enthält.

4. Positionsbestimmungsvorrichtung nach Anspruch 1, **dadurch gekennzeichnet, dass** jeder Strahler (1) geeignet ist zum Senden seiner eigenen Position in einer bestimmten geometrischen Zone (7), wobei sich die Zonen verschiedener Strahler überlappen, so dass von jedem Empfänger (2) mittels eines geeigneten Algorithmus für Zonen und Überlappungszonen die Position des Empfängers bestimmbar ist.

5. Positionsbestimmungsvorrichtung nach Anspruch 1, **dadurch gekennzeichnet, dass** die Strahler (1) über einen Kommunikationskanal (5) von einer Zentrale (3) steuerbar sind, dass pro Zeiteinheit zwei oder mehr Strahler (1) senden, welche untereinander überlappende Zonen haben, so dass in einer zweiten Überlappungszone von einem Empfänger ein Kombinationscode empfangbar ist, der in der Tabelle (10) nicht vorhanden ist, und vom Empfänger durch versuchsweises oder zielgerichtetes Zerlegen und Vergleichen mit den Codes in der Tabelle (10) die Position in der zweiten Überlappungszone bestimmbar ist.

6. Positionsbestimmungsvorrichtung nach Anspruch 5, **dadurch gekennzeichnet, dass** die zeitliche Verschiebung der ineinander liegenden Codes durch den Empfänger (2) gemessen werden kann und durch diese zusätzliche Information die Positionsbestimmung verbessert werden kann.

7. Positionsbestimmungsvorrichtung nach Anspruch 1, **dadurch gekennzeichnet, dass** mehrere Strahler (1) in einem Gehäuse untergebracht sind.

8. Positionsbestimmungsvorrichtung nach Anspruch 1, **dadurch gekennzeichnet, dass** mindestens zwei Strahler (1) in einem Mehrfachstrahler zusammengefasst sind, wobei die Sendevorrichtung mit einer Einrichtung zum Aussenden der identifizierenden Signale der Strahler in wenigstens teilweise räumlich und/oder in der Fläche nicht überlappende Gebiete, umfasst.

9. Positionsbestimmungsvorrichtung nach Anspruch 1, **dadurch gekennzeichnet, dass** die Strahler (1) über einen Kommunikationskanal (5) so gesteuert werden, dass pro Zeiteinheit nur Strahler senden, welche untereinander keine überlappende Zonen (7) haben.

10. Positionsbestimmungsvorrichtung nach Anspruch 1, **dadurch gekennzeichnet, dass** die Strahler (1) über eine integrierte Uhr so gesteuert werden, dass pro Zeiteinheit nur Strahler senden, welche untereinander keine überlappenden Zonen haben.

11. Positionsbestimmungsvorrichtung nach Anspruch 1, **dadurch gekennzeichnet, dass** die Strahler (1) in festen, jedoch jene, welche untereinander überlappende Zonen haben, in unterschiedlichen Intervallen senden.

12. Positionsbestimmungsvorrichtung nach Anspruch 1, **dadurch gekennzeichnet, dass** die Strahler (1) in zufallsbestimmten Intervallen senden.

13. Positionsbestimmungsvorrichtung nach Anspruch 1, **dadurch gekennzeichnet, dass** die Strahler (1) mit unterschiedlichen elektromagnetischen Wellen arbeiten und die Empfänger (2) dazu eingerichtet sind, diese unterschiedlichen Wellen gleichzeitig, jedoch unterscheidbar zu empfangen.

14. Positionsbestimmungsvorrichtung nach Anspruch 1, **dadurch gekennzeichnet, dass** die Tabelle (10) nicht alle möglichen Zonenkombinationen enthält.

15. Positionsbestimmungsvorrichtung nach Anspruch 1, **dadurch gekennzeichnet, dass** die Intensität der elektromagnetischen Wellen (5), die von den Strahlern (1) ausgesandt werden, moduliert und vom Empfänger (2) die Intensität messbar ist und durch diese zusätzliche Information die Positionsbestimmung verbesserbar ist.
